# EUROPEAN PATENT APPLICATION

(11) **EP 4 821 959 A1**
(43) Date of publication of application: **14.10.2026**
(21) Application number: 25854668.8
(22) Date of filing: 12.08.2025
(51) Int. Cl.: C08F 6/00, C08F 10/00, B01D 53/00

(54) **METHOD FOR RECOVERING UNREACTED MONOMERS**

(30) Priority: 13.08.2024 KR 20240108175; 11.08.2025 KR 20250110343
(71) Applicant: LG Chem, Ltd., Seoul 07336 (KR)
(72) Inventor: LYU, Byeong Gil, Seoul 07796 (KR); LEE, Sung Kyu, Seoul 07796 (KR); CHOO, Yeon Uk, Seoul 07796 (KR)
(74) Representative: Vossius & Partner Patentanwälte Rechtsanwälte mbB
(86) International application number: PCT/KR2025/012167
(87) International publication number: WO 2026/038852

(57) **Abstract**

Provided is a method of recovering unreacted monomers including: (S1) supplying a residue including unreacted monomers after a polymerization reaction in a reactor to a gas separation tower to separate an upper stream including an unreacted monomer gas and a lower stream including higher boiling point components; (S2) compressing the upper stream including the unreacted monomer gas discharged from an upper portion of the gas separation tower in a compressor to form a compressed stream, supplying the compressed stream to a condenser, and cooling the compressed stream in the condenser to obtain a cooled stream; and (S3) separating the cooled stream in a gas-liquid separator to recover a liquid monomer fraction from a lower portion of the gas-liquid separator and recover a gaseous monomer fraction from an upper portion of the gas-liquid separator, wherein the liquid monomer fraction recovered from the lower portion of the gas-liquid separator is recirculated to the reactor.

## Description

### [Technical Field]

### CROSS-REFERENCE TO RELATED APPLICATIONS

The present application claims the benefit of priorities to Korean Patent Application No. 10-2024-0108175, filed on August 13, 2024, and Korean Patent Application No. 10-2025-0110343, filed on August 11, 2025, the entire contents of which are incorporated herein as a part of the specification.

### Technical Field

The present invention relates to a method of recovering unreacted monomers, and more particularly, to a method of efficiently recovering unreacted monomers from a polymerization reaction solution while minimizing energy consumption.

### [Background Art]

Polymers such as polyolefins, polystyrenes, and polyamides may be produced by performing a polymerization reaction by adding monomers forming repeating units of polymer chains in the presence of an appropriate catalyst in an organic solvent.

For example, a polyolefin may be produced by adding a feed in which a linear α-olefin monomer such as an ethylene monomer and 1-butene is dissolved in a solvent such as hexane to a reactor and performing a polymerization reaction in the presence of a catalyst. A large amount of monomers are consumed in the polymerization reaction to obtain a polymerization solution from which a polyolefin is produced, a purification process of removing the used solvent, catalyst components, impurities, and the like from the polymerization solution discharged from the reactor is performed to obtain a final polyolefin, and the separated solvent and the monomer may be recovered and reused.

The residue after the purification process is present in a mixed form of the unreacted monomers, the solvent, and the impurities. In order to recover the unreacted monomers and the organic solvent from the residue and reuse them as a raw material, a separation process is required.

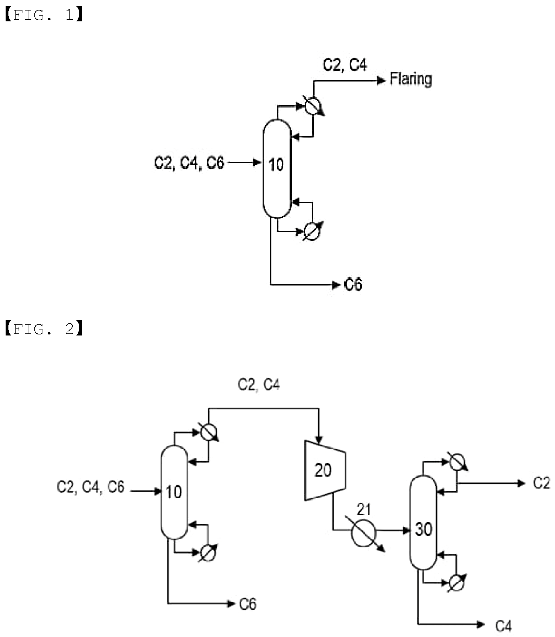

FIGS. 1 and 2 illustrate a conventional separation process for a residue (mixed solution of C2, C4, and C6) remaining in the polymerization reaction process (polyolefin preparation process).

Referring to FIG. 1, a mixed solution of C2, C4, and C6 may be supplied to a gas separation tower 10 and separated into an upper stream including a low boiling point unreacted monomer (C2, C4) gas and a lower stream including a high boiling point component (C6). The high boiling point component (C6) discharged to the lower portion of the gas separation tower 10 may be recovered and reused as a solvent. Meanwhile, since the low boiling point unreacted monomers (C2, C4) discharged to the upper portion of the gas separation tower 10 are present in a gas state at a high temperature, a process of liquefying through ultra-high pressure compression is required for recovery. Therefore, the low boiling point unreacted monomers (C2, C4) may be flared without recovery considering utility costs depending on the process equipment situation, and in this case, problems of loss of raw materials and greenhouse gas emissions arise.

Referring to FIG. 2, a mixed solution of C2, C4, and C6 is supplied to a gas separation tower 10 to separate an upper stream including a low boiling point monomer (C2, C4) gas, which is liquefied with ultra-high pressure (for example, 20 kg/cm²·g) and supplied to a gas purification tower 30, and in a condenser 21 provided in the upper portion of the gas purification tower 30, a C2 monomer having a very low boiling point is separated to the upper portion and a C4 monomer having a higher boiling point is separated to the lower portion, using a cryogenic refrigerant, thereby recovering a low boiling point unreacted monomer. In this case, since equipment costs of additional construction of the gas purification tower for separating the C2 monomer and the C4 monomer are increased, and excessive operating conditions such as use of the cryogenic refrigerant should be involved, energy consumption is increased. In addition, in order to achieve the specification of the unreacted monomers to be recovered, there is a difficulty of frequently changing the operating conditions of the gas purification tower.

### Disclosure

### [Technical Problem]

An object of the present invention is to provide a method for efficiently recovering unreacted monomers, which may minimize equipment/operating costs and energy consumption for recovering low boiling point unreacted monomers from an unreacted residue produced in a polymer preparation process and promote operation stability.

### [Technical Solution]

In one general aspect, a method of recovering unreacted monomers includes: (S1) supplying a residue including unreacted monomers after a polymerization reaction in a reactor to a gas separation tower to separate an upper stream including an unreacted monomer gas and a lower stream including higher boiling point components; (S2) compressing the upper stream including the unreacted monomer gas discharged from an upper portion of the gas separation tower in a compressor to form a compressed stream, supplying the compressed stream to a condenser, and cooling the compressed stream in the condenser to obtain a cooled stream; and (S3) separating the cooled stream in a gas-liquid separator to recover a liquid monomer fraction from a lower portion of the gas-liquid separator and recover a gaseous monomer fraction from an upper portion of the gas-liquid separator, wherein the liquid monomer fraction recovered from the lower portion of the gas-liquid separator is recirculated to the reactor.

### [Advantageous Effects]

According to the present invention, an unreacted monomer gas separated from a residue produced in a polymerization reaction process is liquefied by lowtemperature compression and cooling and recovered, thereby minimizing equipment/operating costs and energy consumption as compared with a conventional recovery method which performs ultra-high pressure compression and then a purification process.

In addition, in the present invention, in the low pressure compression and cooling step, the composition of the unreacted monomers to be recovered is changed by controlling a liquefying temperature of an unreacted monomer stream, and thus, the specification of the monomer raw material used in the polymerization reaction may be efficiently achieved.

Therefore, the gaseous and liquid monomer fractions included in the cooled stream may be recirculated to the compressor in the front stage or reused as the raw material of a polymerization reaction without performing a separate purification process, thereby reducing raw material costs and decreasing greenhouse gas emissions.

### [Description of Drawings]

FIGS. 1 and 2 illustrate a conventional separation process of a residue remaining in a polymerization reaction process.
FIG. 3 illustrates a process of recovering an unreacted monomer gas from a residue produced in the polymerization reaction process according to an exemplary embodiment of the present invention.
FIGS. 4 and 5 illustrate the composition of a liquid monomer fraction and the composition of a gaseous monomer fraction depending on the temperature of a stream cooled by low pressure compression and cooling in the recovery method according to an exemplary embodiment of the present invention, respectively.

### [Best Mode]

The terms and words used in the description and claims of the present invention are not to be construed limitedly as having general or dictionary meanings but are to be construed as having meanings and concepts meeting the technical ideas of the present invention, based on a principle that the inventors are able to appropriately define the concepts of terms in order to describe their own inventions in the best mode.

The meaning of "comprising" or "containing" used herein embodies specific characteristics, domains, integers, steps, actions, elements, or components, and does not exclude the addition of other specific characteristics, domains, integers, steps, actions, elements, or components.

The term "stream" used in the present application may refer to a fluid flow in a process or may refer to a fluid itself flowing in a pipe. Specifically, the stream may refer to both a fluid itself flowing in a pipe connecting each device and a fluid flow. In addition, the fluid may include any one or more components of gas, liquid, and solid.

The term "upper portion" used herein refers to, unless otherwise stated, a point at 0% to 20% of the height measured downward from the top of a device, and specifically, may refer to a top (tower top). In addition, the term "lower portion" refers to a point at 80% to 100% of the height measured downward from the top of a device, and specifically, may refer to a bottom (tower bottom).

In addition, "pressure" mentioned herein refers to gauge pressure measured based on atmospheric pressure.

Meanwhile, in the devices such as a separation tower and a purification tower in the present invention, unless otherwise particularly stated, an operating temperature of the device may refer to a lower temperature of the device. In addition, an operating pressure of the device may refer to an upper pressure of the device, unless otherwise particularly stated.

An exemplary embodiment of the present invention relates to a method for efficiently recovering unreacted monomers from a residue produced in a polymerization reaction process, while consuming minimum energy.

Hereinafter, the present invention will be described in detail with reference to the attached drawings.

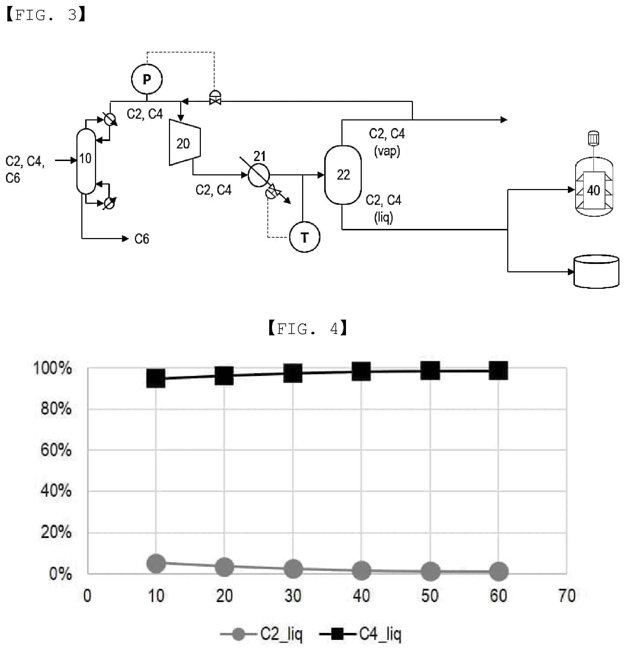

FIG. 3 schematically illustrates a method of recovering an unreacted monomer gas from a residue produced from a polymerization reaction process according to an exemplary embodiment of the present invention, and the recovery method of the present invention may be performed in an equipment system including a gas separation tower 10, a compressor 20, a condenser 21, and a gas-liquid separator 22. In addition, in the gas separation tower, a reboiler for transferring heat to a supply stream and heating and a condenser for converting an upper stream produced by the heating from a gas phase into a liquid phase may be installed, and a valve for controlling a flow of a stream, a pump, a sensor for measuring temperature, pressure, and density, and the like in each device may be further installed and used.

Referring to FIG. 3, a method of recovering unreacted monomers according to an exemplary embodiment of the present invention includes: (S1) supplying a residue including unreacted monomers after a polymerization reaction in a reactor to a gas separation tower to separate an upper stream including an unreacted monomer gas and a lower stream including higher boiling point components; (S2) compressing the upper stream including the unreacted monomer gas discharged from an upper portion of the gas separation tower in a compressor to form a compressed stream, supplying the compressed stream to a condenser, and cooling the compressed stream in the condenser to obtain a cooled stream; and (S3) separating the cooled stream in a gas-liquid separator to recover a liquid monomer fraction from a lower portion of the gas-liquid separator and recover a gaseous monomer fraction from an upper portion of the gas-liquid separator, wherein the liquid monomer fraction recovered from the lower portion of the gas-liquid separator is recirculated to the reactor. Specifically, in the method of recovering unreacted monomers according to the present invention, (S1) includes a process of performing a polyolefin polymerization reaction in a reactor and then supplying a residue including unreacted monomers to the gas separation tower 10 to separate an upper stream including an unreacted monomer gas and a lower stream including higher boiling point components.

The residue including the unreacted monomers may refer to a residue after purifying a polyolefin from a reaction product after performing a polymerization reaction for polymerizing a polyolefin in the reactor 40. The residue including the unreacted monomers may be in a state in which the polyolefin has been almost removed or includes unreacted monomers which do not react in the polymerization reaction. When the unreacted monomers are separated from the residue including the unreacted monomers, supplied to the reactor 40, and reused, loss of the discarded unreacted monomers may be reduced and the costs may also be reduced. The polyolefin may be produced by adding a raw material composition to the reactor and performing a polymerization reaction in the presence of a catalyst, and the raw material composition of the polymerization reaction may include an ethylene monomer or a propylene monomer; and a linear α-olefin (1-butene, 1-pentene, 1-hexene, 1-heptene, 1-octene, and the like) which is copolymerizable with the monomer, as a monomer. In addition, the raw material composition may include a solvent for dissolving monomers to be polymerized and a linear α-olefin, and the solvent may be n-pentane, n-hexane, n-heptane, cyclohexane, methylcyclohexane, octane, cyclooctane, decane, and the like.

In addition, the catalyst for promoting activity in the polymerization reaction may be one or more selected from the group consisting of, transition metal-based catalyst, for example, chromium(III) acetylacetonate, chromium(III) chloride tetrahydrofuran, chromium(III) 2-ethylhexanoate, chromium(III) tris(2,2,6,6-tetramethyl-3,5-heptanedionate), chromium(III) benzoylacetonate, chromium(III) hexafluoro-2,4-pentanedionate, chromium(III) acetate hydroxide, chromium(III) acetate, chromium(III) butyrate, chromium(III) pentanoate, chromium(III) laurate, and chromium(III) stearate.

A large amount of monomers are consumed in the polymerization reaction to obtain a polymerization solution from which a polyolefin is produced, and a purification process of removing the unreacted monomers, the used solvent, catalyst components, impurities, and the like from the polymerization solution discharged from the reactor 40 is performed to obtain a final polyolefin.

In the preparation process of a polyolefin as such, when the polyolefin is purified after the polymerization reaction, a residue including unreacted monomers including the unreacted monomers, a solvent, and impurities may be obtained. For example, the residue including the unreacted monomers may be a mixed solution including C₂ to C₄ unreacted monomers and C₅ to C₁₂ hydrocarbons.

The residue including the unreacted monomers may be supplied to the gas separation tower 10 to separate an upper stream including an unreacted monomer gas and a lower stream including higher boiling point components.

Herein, in the upper portion of the gas separation tower 10, the upper stream including a C₂ and C₄ unreacted monomer gas may be discharged. In addition, in the lower portion of the gas separation tower 10, the lower stream including the higher boiling point components may be discharged, and the higher boiling point components may include C₅ to C₁₂ hydrocarbons.

The gas separation tower 10 may be, for example, a distillation tower.

Specifically, when the gas separation tower 10 is a distillation tower, the residue including the unreacted monomers is supplied to the distillation tower, and the distillation tower is heated to separate the components included in the residue including the unreacted monomers into a gaseous fraction including C₂ to C₄ unreacted monomers and a liquid fraction including C₅ to C₁₂ hydrocarbons. The gaseous fraction including the C₂ to C₄ unreacted monomers includes lower boiling point components to form a gas phase, and the liquid fraction including C₅ to C₁₂ hydrocarbons includes higher boiling point components to form a liquid phase. The gaseous fraction including C₂ to C₄ unreacted monomers may be discharged to the upper stream of the gas separation tower 10 and supplied to the compressor 20, and the liquid fraction including C₅ to C₁₂ hydrocarbons may be discharged to the lower stream of the gas separation tower 10.

In addition, the gas separation tower 10 may be operated at a temperature of 60 to 100 °C or 70 to 90 °C and a pressure of 0.5 to 1.5 kg/cm²·g or 0.6 to 1.2 kg/cm²·g. When the operating conditions are satisfied, unreacted monomers having a low boiling point and a higher boiling point component may be effectively separated, respectively.

In (S2) of the method of recovering unreacted monomers according to the present invention, the upper stream including the unreacted monomer gas discharged from the upper portion of the gas separation tower 10 may be compressed in the compressor 20 to form a compressed stream, and the compressed stream may be cooled in the condenser 21 and liquefied to obtain a cooled stream.

The compressor 20 may use various devices known in the art without limitation as long as it is a device capable of compressing a gas flow using electrical energy and may be applied as one or plural compressors connected in series depending on the capacity of an introduced gas flow.

In the conventional process of recovering unreacted monomers, the unreacted monomers having a low boiling point are discharged through the upper portion of the gas separation tower 10 in a gas state at a high temperature, and the high-temperature gas is directly liquefied by compression at ultra-high pressure to perform a purification process of the unreacted monomers. However, since the conventional process as such is performed under high pressure and cryogenic conditions, increases in energy consumption and equipment costs are caused.

In order to overcome the problems, in the present invention, a process of compressing the upper stream including the unreacted monomer gas discharged from the gas separation tower 10 and then condensing was performed stepwisely. Specifically, the upper stream including the unreacted monomer gas is subjected to low pressure compression of increasing the pressure 1.4 to 10 times, 2 to 8 times, or 2 to 5 times in the compressor 20, and the compressed gas may be subjected to a subsequent process of cooling and liquefying in the condenser 21. More specifically, the upper stream including the unreacted monomer gas discharged from the upper portion of the gas separation tower 10 is compressed at a low pressure in the compressor 20 to form a compressed stream in a gas state having pressure of 1.4 to 10 times, 2 to 8 times, or 2 to 5 times the pressure of the upper stream. The pressure of the compressed stream which is compressed at low pressure may be 1 to 10 kg/cm²·g or 2 to 8 kg/cm²·g. The compression pressure in the compressor 20 may be a pressure (low pressure) lower than the pressure to compress gas discharged from the gas separation tower 10 in the conventional process, and thus, energy to compress the upper stream including the unreacted monomer gas may be reduced, and the subsequent condensation process is performed together to exhibit the same effect as the compression at a high pressure, thereby effectively separating and recovering the unreacted monomers.

When the pressure of the compressed stream is less than 1.4 times the pressure of the upper stream including the unreacted monomer gas, the pressure is high, making it difficult to control and treat the compressed stream, and when it is more than 10 times, excessive energy consumption and an increase in equipment costs may be caused.

In addition, the temperature of the compressed stream may be higher than the upper stream including the unreacted monomer gas and may be increased in proportion to the pressure compressed in the compressor 20. For example, the compressed stream discharged from the compressor 20 may be in a gas state showing a temperature of 70 to 120°C or 80 to 100°C. When the temperature of the compressed stream is lower than 70°C, gas-liquid separation through condensation may be difficult, and when it is higher than 120°C, facility limits may be exceeded, resulting in unstable operation.

The compressed stream may be discharged from the compressor 20, supplied to the condenser 21, and cooled in the condenser 21 by heat exchange with cooling water. The compressed stream may be cooled in the condenser 21 to separate a liquid monomer fraction and a gaseous monomer fraction. The higher boiling point unreacted monomer (for example, C₄ monomer) gas in the introduced compressed stream may be condensed by cooling to form the liquid monomer fraction, and the lower boiling point unreacted monomer (for example, C₂ monomer) gas is not condensed to form the gaseous monomer fraction. Herein, the stream cooled in the condenser 21 may be in a gas-liquid equilibrium state including the gaseous monomer fraction and the liquid monomer fraction.

Specifically, the C₂ monomer or C₄ monomer may be present in a mixed state in the liquid monomer fraction and the gaseous monomer fraction depending on the temperature of the cooled stream. For example, when the temperature of the cooled stream is 10°C to 60°C, the liquid monomer fraction and the gaseous monomer fraction included in the cooled stream may be present in a gas-liquid equilibrium state. That is to say, though the C₂ monomer is mostly present in the gaseous monomer fraction, it may be partly present in the liquid monomer fraction by gas-liquid equilibrium, and though the C₄ monomer is mostly present in the liquid monomer fraction, it may be partly present in the gaseous monomer fraction by gas-liquid equilibrium. This does not mean that in the gaseous monomer fraction and the liquid monomer fraction, the C₂ monomer is separated only as the gaseous monomer fraction and the C₄ monomer is separated only as the liquid monomer fraction, depending on the boiling point of hydrocarbon, but means that the C₂ monomer and the C₄ monomer are mixed and present in the gaseous monomer fraction and the liquid monomer fraction. However, in the gaseous monomer fraction and the liquid monomer fraction, a ratio between the C₂ monomer and the C₄ monomer may be adjusted by controlling the temperature of the cooled stream. By using the characteristic, for example, the C₂ monomer and the C₄ monomer included in the liquid monomer fraction may be directly supplied to the reactor 40 without a separate monomer mixing process, by adjusting the ratio between the C₂ monomer and the C₄ monomer to a ratio appropriate for the polymerization reaction by adjusting the temperature of the condenser 21.

The compressed stream may be condensed by heat exchange with cooling water in the condenser 21, in which the condenser 21 may be operated so that the temperature of the cooled stream is controlled to a range of 10 to 60°C, 10 to 20°C, or 20 to 60°C. The composition of the unreacted monomers included in the cooled stream may be adjusted depending on the temperature. That is to say, the temperature of the cooled stream formed in the condenser 21 may be 10 to 60°C, and the composition ratio of the C₂ monomer or the C₄ monomer included in the gaseous monomer fraction and the liquid monomer fraction may be adjusted depending on the temperature of the cooled stream.

The cooling water supplied to the condenser 21 for heat exchange may show a temperature of 5 to 50°C or 10 to 35°C.

The flow rate of the cooling water which exchanges heat with the compressed stream in the condenser 21 may be adjusted to an appropriate range by measuring the temperature of the cooled stream using a temperature controller (T) provided in the rear stage of the condenser. Specifically, when the temperature of the cooled stream is intended to be raised, the temperature of the cooled stream discharged from the condenser 21 is measured and less cooling water is supplied in proportion to the temperature to be raised and the flow rate of the compressed stream supplied to the condenser 21, thereby adjusting the temperature of the cooled stream. By controlling the temperature of the cooled stream using the convenient control method, the composition ratio of the unreacted monomers included in the gaseous monomer fraction and the liquid monomer fraction may be changed.

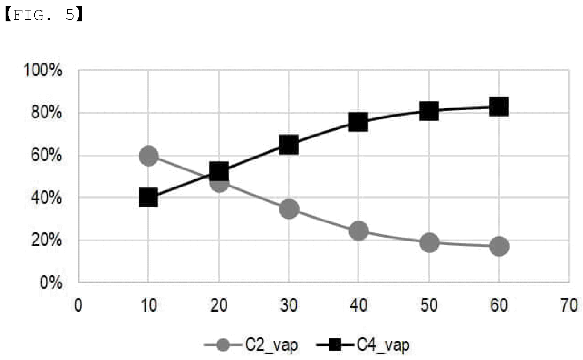

FIGS. 4 and 5 illustrate the composition of the liquid monomer fraction and the composition of the gaseous monomer fraction depending on the temperature of a stream cooled by low pressure compression and cooling in the recovery method according to an exemplary embodiment of the present invention, respectively.

Referring to FIGS. 4 and 5, the higher the temperature of the cooled stream, the higher the ratio of the C₄ monomer gas in the gaseous monomer fraction, and the lower the temperature of the cooled stream, the higher the ratio of the C₂ monomer in the liquid monomer fraction.

As an example, when the temperature of the cooled stream is controlled to 10 to 20°C, the gaseous monomer fraction may include 50 to 60 wt% of the C₂ monomer gas and 40 to 50 wt% of the C₄ monomer gas, based on the weight, and the liquid monomer fraction may include 5 to 10 wt% of the C₂ monomer and 90 to 95 wt% of the C₄ monomer, based on the weight.

Meanwhile, when the temperature of the cooled stream is controlled to higher than 20°C and 60°C or lower, the gaseous monomer fraction may include 20 to 40 wt% of the C₂ monomer gas and 60 to 80 wt% of the C₄ monomer gas, and the liquid monomer fraction may include 1 to 5 wt% of the C₂ monomer and 95 to 99 wt% of the C₄ monomer.

As such, the upper stream including the unreacted monomer gas may be sequentially compressed and cooled (condensed), the composition of the monomer component to be recovered may be secured by adjusting the cooling temperature, and the unreacted monomers recovered as such may be added to the reactor 40 without an additional purification process and directly reused as a raw material.

Therefore, by sequentially applying the compressor and the condenser without a need to provide a gas purification tower which is problematic in the conventional technology, the specification of the unreacted monomers to be recovered may be achieved using less energy. In addition, when the gas purification tower is used, there is a difficulty of often changing the operating conditions of the gas purification tower, but the difficulty may be overcome by sequentially applying the compressor and the condenser.

(S3) of the recovery method according to the present invention includes supplying the cooled stream to the gas-liquid separator 22 to be separated, recovering the liquid monomer fraction from the lower portion of the gas-liquid separator, and recovering the gas monomer fraction from the upper portion of the gas-liquid separator.

The stream cooled through compression and cooling in the previous step is present in a gas-liquid equilibrium state including the gas monomer fraction and the liquid monomer fraction and may be separated into the liquid monomer fraction and the gaseous monomer fraction and recovered.

Herein, the gas-liquid separator 22 may be operated without additional heat supply depending on the pressure conditions compressed in the compressor in the front stage. That is to say, the gas-liquid separator 22 may separate the cooled stream into the gaseous monomer fraction and the liquid monomer fraction, using the temperature and pressure of the cooled stream which is a stream discharged through the compressor 20 and the condenser 21.

For example, the gas-liquid separator 22 may be a flash drum. The cooled stream may be separated in the flash drum, the gaseous monomer fraction may be discharged to the upper portion of the flash drum and recovered, and the liquid monomer fraction may be discharged to the lower portion of the flash drum and recovered.

Meanwhile, the gaseous monomer fraction may be recovered from the upper portion of the gas-liquid separator 22, and a part of the gaseous monomer fraction may be recirculated to the compressor 20 of (S2) and the remaining may be discharged and incinerated. The compressor 20 needs to be continuously supplied with a certain amount or more of gas for stable operation, and in order to maintain the flow as such, a part of the gaseous monomer fraction may be recirculated to the compressor 20. When the gas supplied to the compressor 20 is insufficient, the gaseous flow of the column in the front stage is pulled to prevent the pressure conditions of the column in the front stage to be maintained, or the compression pressure of the compressor 20 itself is affected to make the compression process unstable. For example, the flow rate recirculated to the compressor may be 10 to 90 wt% or 30 to 80 wt% of the total gaseous monomer fraction flow rate.

Meanwhile, the liquid monomer fraction recovered from the lower portion of the gas-liquid separator may be transferred to a storage tank for use in the raw material composition of the polymerization reaction or directly supplied to the reactor without being transferred to the storage tank. Herein, since the composition of the C₂ and C₄ unreacted monomers included in the liquid monomer fraction is the same as the composition required in the reactor to which they are supplied, separate purification and mixing processes of the monomers do not need to be performed, and energy required for process equipment and process may be reduced.

As such, the gaseous and liquid monomer fractions included in the cooled stream may be recirculated to the compressor in the front stage or reused as the raw material of a polymerization reaction without performing a separate purification process, thereby reducing raw material costs and decreasing greenhouse gas emissions.

Hereinafter, the present invention will be described in more detail by the examples. However, the following examples are provided for illustrating the present invention, and it is apparent to a person skilled in the art that various modifications and alterations may be made without departing from the scope and spirit of the present invention, and the scope of the present invention is not limited thereto.

In the following examples and comparative examples, the method according to the present invention was simulated using a commercial process simulation program, ASPEN PLUS. Constants required for simulation used values embedded in the program, values described in the literature, and the like.

### Example 1:

According to the process flow diagram shown in FIG. 3, the process of recovering unreacted monomers was simulated.

First, a residue (mixed solution including unreacted monomers of C₂ ethylene and C₄ butene and a C₆ hexane solvent) produced in the polyolefin preparation process was supplied to a gas separation tower 10 to separate an upper discharge stream including C₂ and C₄ gases and a lower discharge stream including C₆ or higher components having a high boiling point. At this time, the operating conditions of the gas separation tower 10 were applied as the lower temperature of 86°C and the upper pressure of 0.7 kg/cm²·g.

The upper discharge stream from the gas separation tower 10 was compressed at low pressure in a compressor 20 to discharge a compressed gas at 81°C and 5 kg/cm²·g, and the compressed gas was cooled by heat exchange with cooling water at 5°C in a condenser 21 to obtain a cooled stream (10°C).

The cooled stream was supplied to a gas-liquid separator 22 to separate a liquid monomer fraction and a gaseous monomer fraction, thereby recovering the unreacted monomers in the polyolefin preparation process. Among them, the liquid monomer fraction was supplied to an appropriate reactor 40 depending on the composition of the unreacted monomers included in the liquid monomer fraction.

### Examples 2 to 6:

Unreacted monomers were recovered in the same manner as in Example 1, except that the cooling temperature of the compressed gas in the condenser was changed to the conditions shown in Table 1.

### Comparative Example 1:

According to the process flow diagram shown in FIG. 2, the process of recovering unreacted monomers was simulated.

First, a residue (mixed solution including unreacted monomers of C₂ ethylene and C₄ butene and a C₆ hexane solvent) produced in the polyolefin preparation process was supplied to a gas separation tower 10 to separate an upper discharge stream including C₂ and C₄ gases and a lower discharge stream including C₆ or higher components having a high boiling point. At this time, the operating conditions of the gas separation tower 10 were applied as the lower temperature of 86°C and the upper pressure of 0.7 kg/cm²·g.

The upper discharge stream from the gas separation tower 10 was subjected to ultra-high compression in the compressor 20 to obtain the cooled stream at -9°C and 20 kg/cm²·g.

The cooled stream was supplied to the gas purification tower 30 to separate C₂ having a very low boiling point to the upper portion and C₄ having a higher boiling point to the lower portion. At this time, the operating conditions of the lower temperature of 100°C and the upper pressure of 20 kg/cm²·g were applied to the gas purification tower 30, while using a cryogenic refrigerant at -20°C in the condenser provided in the upper portion.

The process conditions applied to the examples and the comparative example and the recovery results of the unreacted monomers therefrom are shown in the following Table 1. In Table 1, in the liquefaction conditions of the unreacted monomer gas, the compression pressure and the cooling temperature refer to the pressure and temperature of the cooled stream.

Additionally, the composition of the liquid monomer fraction of the cooled stream and the composition of the gaseous monomer fraction which were obtained by changing the cooling temperature of the compressed gas are shown in FIGS. 4 and 5, respectively.

**[Table 1]**

| Classificat | Liquefaction | | Gas | | Composition of | |
|---|---|---|---|---|---|---|
| ion | conditions of unreacted monomer gas | | purification tower construction | consumption¹⁾ | finally recovered unreacted monomers (wt%) | |
| | Compression (kg/cm²·g) | Cooling (°C) | | | Gaseous monomer fraction | Liquid monomer fraction |
| Example 1 | 5 | 10 | × | 30.6 | C2/C4 (60/40) | C2/C4 (7/93) |
| Example 2 | 5 | 20 | × | 30.6 | C2/C4 (45/55) | C2/C4 (5/95) |
| Example 3 | 5 | 30 | × | 30.6 | C2/C4 (39/61) | C2/C4 (4/96) |
| Example 4 | 5 | 40 | × | 30.6 | C2/C4 (25/75) | C2/C4 (3/97) |
| Example 5 | 5 | 50 | × | 30.6 | C2/C4 (21/79) | C2/C4 (2/98) |
| Example 6 | 5 | 60 | × | 30.6 | C2/C4 (17/83) | C2/C4 (1/99) |
| Comparative Example 1 | 20 | -9 | ○ | 193.1 | C2 (100) | C4 (100) |
| ¹⁾ Energy consumption was calculated as the sum of consumed energy in the compressor and the reboiler in the entire facility. | | | | | | |

From Table 1, it was confirmed that as a result of compressing unreacted monomer gas including C₂ and C₄ separated from the residue including the unreacted monomers produced in the polyolefin preparation process at low pressure in the compressor and then cooling it in the condenser, Examples 1 to 6 had significantly decreased energy consumption as compared with Comparative Example 1 in which the purification process was performed using the gas purification tower after ultra-high compression. That is, in the examples, compression was performed at a very low pressure as compared with the comparative example, cooling was performed at a higher temperature than the cooling temperature of the comparative example, and thus, energy required for compression and cooling was able to be reduced, a gas purification tower having high energy consumption was not used, and unreacted monomers having the desired composition were able to be recovered. This may reduce energy and costs and simplify equipment required for purifying and mixing of the unreacted monomers.

In addition, in Examples 1 to 6, the composition of the unreacted monomers recovered by controlling the cooling temperature of the stream including C₂ and C₄ unreacted monomers, that is, the cooled stream was able to be changed. Referring to Table 1, it was confirmed that as the cooling temperature in the examples was raised, the C₂ composition was decreased and the C₄ composition was increased in the gaseous monomer fraction and the liquid monomer fraction.

The unreacted monomers recovered as such may be recirculated to the compressor in the front stage or reused in the reactor as the raw material of the polymerization reaction without performing a separate purification process, through which the raw material costs may be reduced.

### [Reference signs list]

- 10:: Gas separation tower
- 20:: Compressor
- 21:: Condenser
- T:: Temperature controller
- P:: Pressure controller
- 22:: Gas-liquid separator
- 30:: Gas purification tower
- 40:: Reactor

## Claims

1. A method of recovering unreacted monomers, the method comprising:
(S1) supplying a residue including unreacted monomers after a polymerization reaction in a reactor to a gas separation tower to separate an upper stream including an unreacted monomer gas and a lower stream including higher boiling point components;
(S2) compressing the upper stream including the unreacted monomer gas discharged from an upper portion of the gas separation tower in a compressor to form a compressed stream, supplying the compressed stream to a condenser, and cooling the compressed stream in the condenser to obtain a cooled stream; and
(S3) separating the cooled stream in a gas-liquid separator to recover a liquid monomer fraction from a lower portion of the gas-liquid separator and recover a gaseous monomer fraction from an upper portion of the gas-liquid separator,
wherein the liquid monomer fraction recovered from the lower portion of the gas-liquid separator is recirculated to the reactor.

2. The method of recovering unreacted monomers of claim 1, wherein the residue supplied to the gas separation tower is a mixed solution of C₂ to C₄ unreacted monomers and C₅ to C₁₂ hydrocarbons.

3. The method of recovering unreacted monomers of claim 1, wherein a pressure of the compressed stream is 1.4 times to 10 times a pressure of the upper stream including the unreacted monomer gas.

4. The method of recovering unreacted monomers of claim 1, wherein the compressed stream has a pressure of 1 to 10 kg/cm²·g and a temperature of 70 to 120°C.

5. The method of recovering unreacted monomers of claim 1, wherein the condenser cools the compressed stream by heat exchange with cooling water, and a temperature of the cooling water is in a range of 5 to 50°C.

6. The method of recovering unreacted monomers of claim 1, wherein a temperature of the cooled stream is 10 to 60°C.

7. The method of recovering unreacted monomers of claim 1, wherein the higher the temperature of the cooled stream, the higher the ratio of the C₄ monomer gas included in the gaseous monomer fraction recovered from the upper portion of the gas-liquid separator.

8. The method of recovering unreacted monomers of claim 1, wherein the lower the temperature of the cooled stream, the higher the ratio of the C₂ monomer included in the liquid monomer fraction recovered from the lower portion of the gas-liquid separator.

9. The method of recovering unreacted monomers of claim 1,
wherein the temperature of the cooled stream is 10 to 20°C,
the gaseous monomer fraction recovered from the upper portion of the gas-liquid separator includes 50 to 60 wt% of a C₂ monomer gas and 40 to 50 wt% of a C₄ monomer gas, based on the weight, and
the liquid monomer fraction recovered from the lower portion of the gas-liquid separator includes 5 to 10 wt% of the C₂ monomer and 90 to 95 wt% of the C₄ monomer, based on the weight.

10. The method of recovering unreacted monomers of claim 1,
wherein the temperature of the cooled stream is higher than 20°C and 60°C or lower,
the gaseous monomer fraction recovered from the upper portion of the gas-liquid separator includes 20 to 40 wt% of the C₂ monomer gas and 60 to 80 wt% of the C₄ monomer gas, and
the liquid monomer fraction recovered from the lower portion of the gas-liquid separator includes 1 to 5 wt% of the C₂ monomer and 95 to 99 wt% of the C₄ monomer.

11. The method of recovering unreacted monomers of claim 1, wherein at least a part of the gaseous monomer fraction recovered from the upper portion of the gas-liquid separator is recirculated to the compressor of (S2).

12. The method of recovering unreacted monomers of claim 1, wherein the liquid monomer fraction recovered from the lower portion of the gas-liquid separator is supplied as a raw material of the polymerization reaction.
